# FASCICULE DE BREVET EUROPEEN

(11) **EP 0 988 674 B1**
(45) Date de publication et mention de la délivrance du brevet: **02.10.2002**
(21) Numéro de dépôt: 98929486.3
(22) Date de dépôt: 04.06.1998
(51) Int. Cl.: H02G 15/068

(54) **EXTREMITE DE CABLE RECOUVERTE D'UN MANCHON ISOLANT A JUPES**
VON EINER MIT SCHIRMEN VERSEHENEN ISOLIERHÜLSE ÜBERDECKTER KABELENDVERSCHLUSS
CABLE END SHEATHED IN INSULATING SLEEVE WITH SKIRTS

(30) Priorité: 10.06.1997 FR 9707167
(43) Date de publication de la demande: 29.03.2000
(73) Titulaire: SAGEM S.A., 75016 Paris (FR)
(72) Inventeur: Reignier, Philippe, 67530 Ottrott (FR)
(74) Mandataire: Fruchard, Guy
(86) Numéro de dépôt international: FR9801134
(87) Numéro de publication internationale: WO98057405

(56) Documents cités:
- EP-A- 0 007 584
- WO-A-91/16564
- FR-A- 2 656 962
- US-A- 5 130 495

## Description

La présente invention concerne une extrémité de câble recouverte d'un manchon isolant à jupes, notamment pour des câbles à haute ou très haute tension, par exemple des câbles de transport d'électricité.

On connaît notamment du document US 5.130.495 une extrémité de câble comportant un conducteur, une enveloppe isolante disposée autour du conducteur, un écran de câble conducteur disposé autour de l'enveloppe isolante et définissant avec le conducteur une série de surfaces équipotentielles en relation avec un organe répartiteur de tension et un manchon isolant comprenant un corps tubulaire s'étendant en regard de l'enveloppe isolante et une série de jupes s'étendant en saillie vers l'extérieur autour du corps tubulaire.

Afin d'avoir accès au conducteur tout en évitant une liaison électrique ou la naissance d'un arc électrique entre le conducteur et l'écran de câble, l'enveloppe isolante est découpée en retrait par rapport à l'extrémité du conducteur, l'écran de câble est découpé en retrait par rapport à l'extrémité de l'enveloppe isolante, et l'organe répartiteur de tension associé au manchon isolant est disposé sur l'extrémité de câble. Les jupes du manchon isolant par leur disposition en saillie augmentent la distance qu'aurait à parcourir un arc de contournement le long du manchon isolant.

Les jupes abritent les portions du corps tubulaire adjacentes de sorte que de l'eau provenant d'intempéries ou de la pollution ne peuvent s'y déposer et former une couche conductrice continue sur le corps tubulaire. En revanche, la surface de chaque jupe soumise aux intempéries ou à la pollution porte une telle couche conductrice. Il en résulte que les surfaces équipotentielles traversant initialement les jupes suivent le contour de la partie de la jupe rendue conductrice et rattrapent leur profil normal au bord de la jupe. Au lieu de présenter un profil curviligne continu les surfaces équipotentielles comportent donc un profil anguleux générateur de contraintes électriques importantes qui détériorent la jupe. La protection conférée par les jupes est donc amoindrie.

Un but de l'invention est de réaliser une extrémité de câble recouverte par un manchon dont les jupes n'entraînent pas de déformation des surfaces équipotentielles lorsqu'elles sont mouillées et/ou polluées.

Le manchon selon l'invention se distingue de celui de l'art antérieur tel que rappelé ci-dessus en ce qu'au moins une des jupes a selon une coupe axiale un profil sensiblement identique à un profil d'une surface équipotentielle correspondante présentant un profil curviligne continu exempt de point anguleux.

Ainsi, une jupe dont le profil est sensiblement identique à celui de la surface équipotentielle correspondante n'est jamais traversée par cette surface équipotentielle. Aucune déformation de cette dernière ne survient alors, lorsque la jupe est mouillée ou polluée.

Avantageusement, une jupe ayant selon une coupe axiale un profil sensiblement identique à celui de la surface équipotentielle correspondante est disposée en regard d'une extrémité de l'écran de câble.

Ainsi on s'assure que la surface équipotentielle immédiatement adjacente à l'extrémité de l'écran de câble, laquelle génère habituellement les contraintes électriques les plus fortes, est exempte de point anguleux, et l'on minimise ainsi la détérioration du manchon isolant.

Avantageusement encore, une pluralité de jupes adjacentes à l'extrémité de l'écran de câble ont, selon une coupe axiale, un profil sensiblement identique à celui de surfaces équipotentielles correspondantes.

Ainsi, les jupes sont préservées de toutes dégradations dans toute la zone de l'extrémité de câble dans laquelle réside le gradient de potentiel le plus élevé et où les surfaces équipotentielles sont les plus proches les unes des autres.

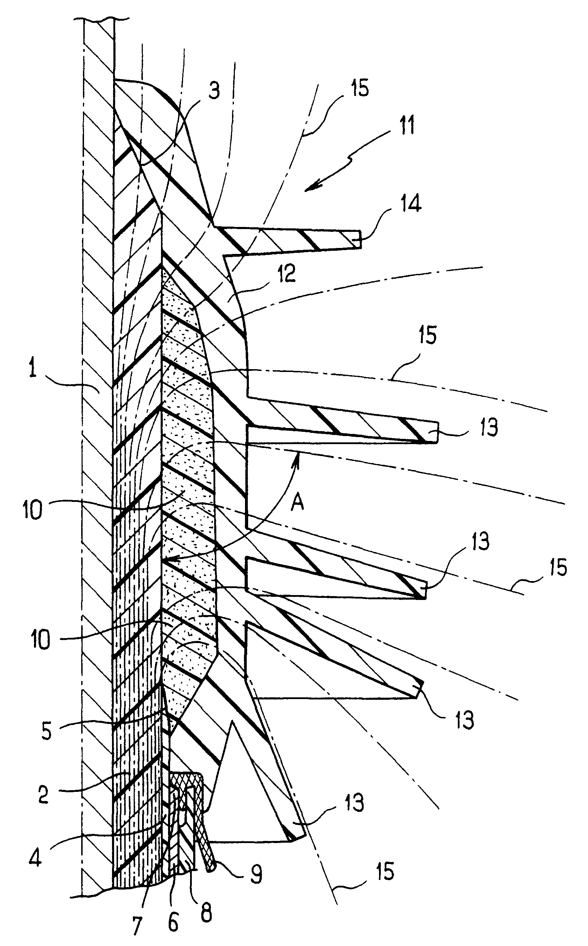

D'autres caractéristiques et avantages de l'invention apparaîtront à la lecture de la description qui suit d'un mode de réalisation particulier non limitatif de l'invention en liaison avec la figure unique ci-jointe qui représente une demi-vue en coupe axiale schématique de l'extrémité de câble selon l'invention.

En référence à la figure, l'extrémité de câble selon l'invention comporte un conducteur cylindrique 1 formé de façon classique d'une série de fils conducteurs en toron, une enveloppe isolante 2 disposée autour du conducteur 1 et ayant une extrémité 3 en retrait par rapport à l'extrémité du conducteur, un écran de câble 4, conducteur ou semi-conducteur, disposé autour de l'enveloppe isolante 2 et ayant une extrémité 5 en retrait par rapport à l'extrémité 3 de l'enveloppe isolante, un blindage métallique 6 disposé autour de l'écran de câble 4 et ayant une extrémité 7 en retrait par rapport à l'extrémité de l'écran de câble, une gaine isolante 8 entourant le blindage 6, et une tresse de mise à la terre 9 en contact avec l'extrémité 7 du blindage 6. D'une façon classique, la gaine isolante 8, le blindage 6, l'écran de câble 4 et l'enveloppe isolante 2 ont une structure généralement cylindrique et s'étendent par couches successives autour du conducteur 1.

Le conducteur 1, porté à un potentiel élevé, et l'écran de câble 4 associé aux éléments le reliant à la terre, définissent une série de surfaces équipotentielles 15 en relation avec un organe répartiteur de tension, ici une couche de matériau à haute permittivité 10, disposé autour de l'enveloppe isolante 2 pour répartir les surfaces équipotentielles le long de l'enveloppe isolante 2. La couche de matériau à haute permittivité, connue en soi, s'étend entre l'extrémité 5 de l'écran de câble 4 et l'extrémité 3 de l'enveloppe isolante 2.

Un manchon isolant, généralement désigné en 11, et réalisé en une matière plastique isolante comprend un corps tubulaire 12 s'étendant en regard de l'enveloppe isolante 2. Le corps tubulaire 12 recouvre le matériau à haute permittivité 10, et les zones adjacentes de l'enveloppe isolante 2, de l'écran de câble 4 et de la gaine 8.

Le manchon isolant 11 est muni d'une série de jupes 13 et 14. Les jupes 13 et 14 s'étendent en saillie vers l'extérieur autour du corps tubulaire 12.

Les jupes 13 correspondent à des surfaces équipotentielles qui forment un angle (A) aigu avec le conducteur 1 dans la partie des surfaces équipotentielles qui débouchent du corps tubulaire 12. Les jupes 13 sont celles qui sont à proximité de l'extrémité 5 de l'écran de câble 4. Chaque jupe 13 présente, en coupe axiale (telle que représentée à la figure), un profil identique au profil de la surface équipotentielle qui lui correspond. Une des jupes 13 s'étend en regard de l'extrémité de l'écran de câble 4. Ainsi, aucune des jupes 13 qui se trouvent dans la zone de l'extrémité de câble où réside le plus fort gradient de potentiel et où les surfaces équipotentielles sont les plus proches les unes des autres, n'est traversée par une surface équipotentielle. Les jupes 13 réalisées conformément à l'invention ne sont alors soumises qu'à une contrainte électrique minime même lorsqu'elles sont mouillées ou polluées.

On remarquera qu'au voisinage de l'extrémité 3 de l'enveloppe isolante les surfaces équipotentielles tendent à prendre un profil de plus en plus parallèle au conducteur 1. La jupe correspondante 14 ne peut donc avoir un profil identique à la surface équipotentielle correspondante car elle constituerait alors un entonnoir, l'extrémité étant habituellement disposée verticalement. Contrairement aux jupes 13, la jupe 14 est donc traversée par une surface équipotentielle. Toutefois dans cette zone de l'extrémité de câble les surfaces équipotentielles divergent très largement les unes des autres et la jupe 14, bien que traversée par une surface équipotentielle, ne sera pas soumise à une forte contrainte électrique. Il n'est donc pas nécessaire qu'elle ait un profil identique à celui de la surface équipotentielle adjacente.

Bien entendu l'invention n'est pas limitée au mode de réalisation décrit et on peut y apporter des variantes de réalisation sans sortir du cadre de l'invention tel que défini par les revendications.

En particulier, bien qu'une simple couche de matériau à haute permittivité soit utilisée pour répartir les surfaces équipotentielles, on pourrait disposer sur l'enveloppe isolante 2 un ou plusieurs éléments déflecteurs en matériau conducteur ou semi-conducteur séparés les uns des autres par un matériau à haute permittivité.

Bien que le manchon isolant ait été décrit en relation avec un manchon moulé comportant des jupes annulaires, il pourrait être extrudé, les jupes étant alors constituées par une nappe enroulée en hélice autour du corps tubulaire.

## Revendications

1. Extrémité de câble comportant un conducteur (1), une enveloppe isolante (2) disposée autour du conducteur, un écran de câble (4) conducteur disposé autour de l'enveloppe isolante (2) et définissant avec le conducteur une série de surfaces équipotentielles (15) en relation avec un organe répartiteur de tension (10) et un manchon isolant (11) comprenant un corps tubulaire (12) s'étendant en regard de l'enveloppe isolante et une série de jupes (13, 14) s'étendant en saillie vers l'extérieur autour du corps tubulaire, **caractérisé en ce qu'**au moins une des jupes (13) a, selon une coupe axiale, un profil sensiblement identique à un profil d'une surface équipotentielle correspondante présentant un profil curviligne continu exempt de point anguleux.

2. Extrémité de câble selon la revendication 1, **caractérisée en ce qu'**une jupe (13) ayant, selon une coupe axiale, un profil sensiblement identique à celui de la surface équipotentielle correspondante (15) est disposée en regard d'une extrémité (5) de l'écran de câble (4).

3. Extrémité de câble selon la revendication 1 ou la revendication 2, **caractérisée en ce qu'**une pluralité de jupes (13) adjacentes à l'extrémité (5) de l'écran de câble (4) ont, selon une coupe axiale, un profil sensiblement identique à celui de surfaces équipotentielles correspondantes (15).

4. Extrémité de câble selon la revendication 3, **caractérisée en ce que** chacune des jupes correspondant à une surface équipotentielle formant un angle aigu (A) avec le conducteur a, selon une coupe axiale, un profil sensiblement identique au profil de la surface équipotentielle à laquelle elle correspond.

## Claims

1. A cable end comprising a conductor (1), an insulating covering (2) disposed around the conductor, a conductive cable screen (4) disposed around the insulating covering and defining with the conductor a series of equipotential surfaces (15) and an insulating sleeve (11) comprising a tubular body (12) extending over the insulating envelope and a series of skirts (13, 14) projecting outwards around the tubular body, the cable end being **characterized in that** at least one of the skirts (13) has, in axial section, a profile that is substantially identical to a profile of a corresponding equipotential surface having a continuous curvilinear profile devoid of angulous point.

2. A cable end according to claim 1, **characterized in that** a skirt (13) whose profile in axial section is substantially identical to that of a corresponding equipotential surface (15) is disposed over the end (5) of the cable screen (4).

3. A cable end according to claim 1 or claim 2, **characterized in that** a plurality of skirts (13) adjacent to the end (5) of the cable screen (4) are, in axial section, of profiles that are substantially identical to the profiles of the corresponding equipotential surfaces (15).

4. A cable end according to claim 3, **characterized in that** each of the skirts corresponding to an equipotential surface forming an acute angle (A) with the conductor is, in axial section, of a profile that is substantially identical to the profile of the equipotential surface with which it corresponds.

## Patentansprüche

1. Kabelendverschluß mit einem Leiter (1), einer Isolierschicht (2), welche den Leiter umgibt, einer leitenden Kabelabschirmung (4), welche die Isolierschicht (2) umgibt und mit dem Leiter eine Reihe von Äquipotentialflächen (15) bezüglich eines Spannungsverteilungselements (10) und einer Isolierhülse (11) bildet, wobei die Isolierhülse einen röhrenförmigen Körper (12) hat, der sich gegenüber der Isolierschicht (2) erstreckt, und wobei mehrere Schirme (13, 14) von dem röhrenförmigen Körper ausgehend nach außen abstehen, **dadurch gekennzeichnet, daß** mindestens ein Schirm (13) entlang einem Achsenquerschnitt ein im wesentlichen mit dem Profil einer entsprechenden Äquipotentialfläche identisches Profil hat, wobei das Profil der Äquipotentialfläche ohne einen Winkelpunkt durchgehend kurvilinear ist.

2. Kabelendverschluß nach Anspruch 1, **dadurch gekennzeichnet, daß** ein Schirm (13) mit einem Profil, das entlang einem Achsenquerschnitt im wesentlichen dem Profil der entsprechenden Äquipotentialfläche (15) entspricht, gegenüberliegend einem Ende (5) der Kabelabschirmung (4) angeordnet ist.

3. Kabelendverschluß nach Anspruch 1 oder 2, **dadurch gekennzeichnet, daß** mehrere Schirme (13), die an das Ende (5) der Kabelabschirmung (4) angrenzen, entlang einem Achsenquerschnitt ein im wesentlichen den entsprechenden Äquipotentialflächen (15) entsprechendes Profil haben.

4. Kabelendverschluß nach Anspruch 3, **dadurch gekennzeichnet, daß** jeder Schirm, der einer Äquipotentialfläche entspricht, die mit dem Leiter einen spitzen Winkel (A) bildet, entlang einem Achsenquerschnitt ein im wesentlichen dem Profil der ihm entsprechenden Äquipotentialfläche entsprechendes Profil hat.
